## Europäisches Patentamt
## European Patent Office
## Office européen des brevets

(11) Publication number: **0 173 097**
**B1**

# EUROPEAN PATENT SPECIFICATION

(45) Date of publication of patent specification: **27.09.89**

(51) Int. Cl.⁴: **G 03 B 27/32, G 03 B 27/46**

(21) Application number: **85109597.6**

(22) Date of filing: **30.07.85**

(54) Photographic printing system.

(30) Priority: **03.08.84 JP 163601/84**
**03.08.84 JP 163602/84**
**03.08.84 JP 163603/84**
**03.08.84 JP 163604/84**
**03.08.84 JP 163605/84**
**03.08.84 JP 163606/84**
**03.08.84 JP 163607/84**

(43) Date of publication of application:
**05.03.86 Bulletin 86/10**

(45) Publication of the grant of the patent:
**27.09.89 Bulletin 89/39**

(84) Designated Contracting States:
**CH DE LI**

(56) References cited:
**EP-A-0 055 030**
**DE-A-1 772 513**
**DE-A-2 438 913**
**DE-A-3 424 799**
**DE-B-1 181 043**
**US-A-4 592 647**

(73) Proprietor: **FUJI PHOTO FILM CO., LTD.**
**210 Nakanuma Minami Ashigara-shi**
**Kanagawa 250-01 (JP)**

(72) Inventor: **Horiguchi, Masashi**
**No. 26-30, Nishiazabu 2-chome**
**Minato-ku Tokyo 106 (JP)**
Inventor: **Kashiwagi, Shigeo**
**No. 26-30, Nishiazabu 2-chome**
**Minato-ku Tokyo 106 (JP)**

(74) Representative: **Fuhlendorf, Jörn et al**
**Patentanwälte Dreiss, Hosenthien & Fuhlendorf**
**Gerokstrasse 6**
**D-7000 Stuttgart 1 (DE)**

## Description

### Field of the Invention:

The present invention relates to a photographic printing system which effects printing of slide films by employing detachable slide housing magazines which are respectively mounted on the slide-supply and -reception sides of a printer.

### Description of the Prior Art:

This type of photographic printing system generally requires, in the processes conducted after the printing process, film information which has been given before printing and film information which is obtained in the printer. For example, when a print carries a defective picture due to an inappropriate amount of exposure and re-printing is therefore required, it is necessary for exposure time information obtained in the printer to be taken into consideration. Further, when printing has been completed and slides and prints are put into bags for individual customers, it is therefore necessary to check the number of produced slides and the number of processed prints against the respective numbers in the order placed by each individual customer.

It is possible to cope with the above-described needs by connecting together various apparatuses in the system through cable and transferring information therebetween.

However, the time required for processing one magazine differs for each of the processing apparatuses which are respectively employed in various steps. For this reason, processing of information is inconveniently complicated in the case of employing a plurality of processing apparatuses. In addition, it is not possible for one particular magazine to be applied to any of a plurality of apparatuses. Furthermore, it is necessary for each of the apparatuses to store film information in relation to a large number of magazines over a relatively long period of time, starting with the preparations for printing and ending with the operation of putting prints into bags, which fact disadvantageous requires an extremely large memory capacity in order to cover what is maximumly necessary.

### SUMMARY OF THE INVENTION

In view of the above-described circumstances, it is a primary object of the present invention to provide a photographic printing system which enables a simplified arrangement and operation to be employed.

To this end, the invention as claimed provides a photographic printing system in which magazines are detachably mounted on the supply and reception sides, respectively, of a printer. Each of the magazines is provided with a plurality of slide housing chambers and a film information memory means which stores film information in correspondence with each of the slide housing chambers.

The magazine mounted on the supply side of the printer is arranged such as to supply the printer with slides which are used for printing and slide film information (e.g., exposure amount correction information, focusing information, information about the number of prints required and so forth). On the other hand, the magazine mounted on the reception side of the printer is adapted to receive from the printer those slides which have already been subjected to printing and slide film information composed by adding information (e.g., exposure time information) obtained in the printer to the information which has been supplied from the supply-side magazine.

### BRIEF DESCRIPTION OF THE DRAWINGS

The above and other objects, features and advantages of the present invention will become more apparent from the following description of the preferred embodiment thereof, taken in conjunction with the accompanying drawings, in which like reference numerals denote like elements, and in which:

Fig. 1 shows a general arrangement of a slide printing system in accordance with one embodiment of the invention;

Fig. 2 is a perspective view of a printing preparation apparatus;

Fig. 3 is a front elevational view of a slide;

Fig. 4 is a front elevational view of a sorting card;

Fig. 5 is a fragmentary sectional view of the printing preparation apparatus, which shows the way in which slide conditions are measured;

Fig. 6 is a fragmentary sectional view of the printing preparation apparatus, which shows a structure used for sorting card detection;

Fig. 7 is an exploded perspective view of a magazine;

Fig. 8 is a partially cutaway perspective view of a magazine driver;

Fig. 9 is an enlarged view of a portion of the magazine, which shows slide housing chambers;

Fig. 10 is a sectional view taken along the line V-V of Fig. 2;

Fig. 11 is a plan view of the magazine and the magazine driver;

Fig. 12 is a plan view of the magazine driver;

Fig. 13 is a perspective view of a magazine mounting board and its associated elements, which shows the connecting portion between the magazine and the magazine driver;

Fig. 14 is a perspective view of a magazine securing structure;

Fig. 15 is a schematic view of a printer;

Fig. 16 shows the arrangement of hardware devices which constitute the information processing system shown in Fig. 15;

Fig. 17 shows a portion of a roll of photographic paper which has signs printed on one end portion thereof;

Fig. 18 is a perspective view of a checker;

Fig. 19 is a partially sectioned plan view of the checker;

Fig. 20 is a perspective view of a portion of a slide discharger; and

Figs. 21 to 24 are flow charts which respectively show processings which are carried out in the various apparatuses (except for the checker) shown in Fig. 1.

## DESCRIPTION OF THE PREFERRED EMBODIMENT

One embodiment of the present invention will be described hereinunder with reference to the accompanying drawings.

Slide Printing System:

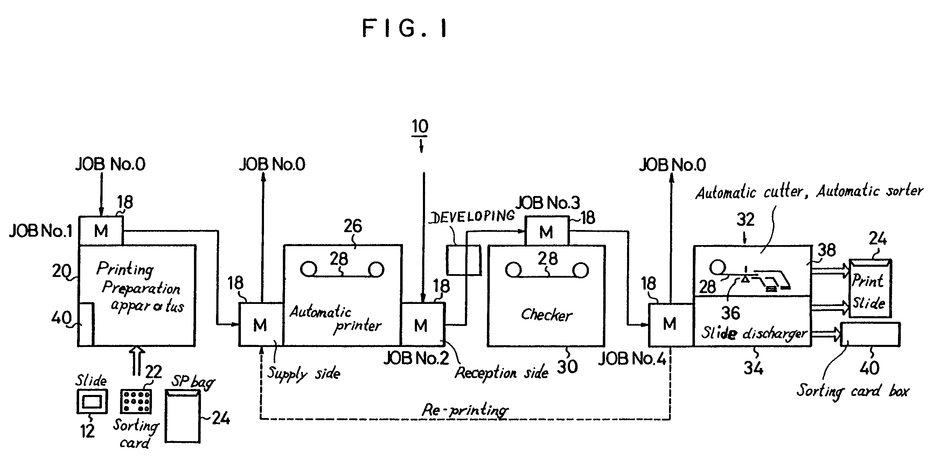

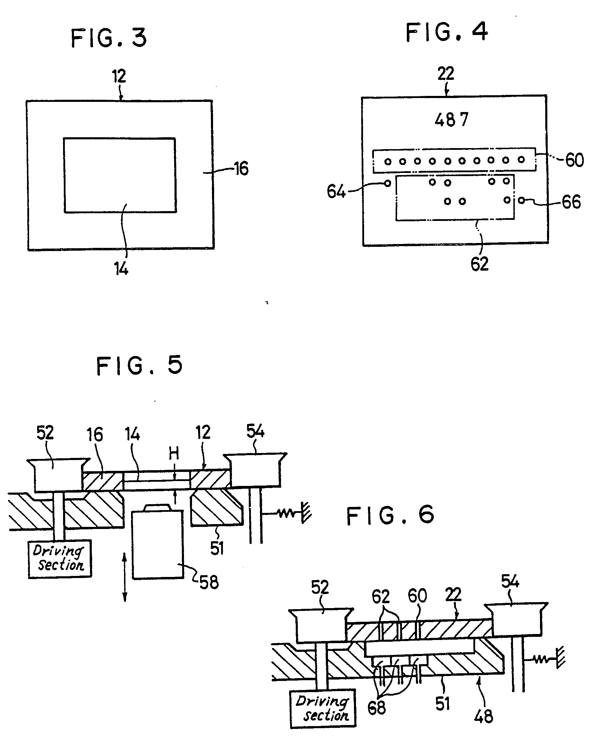

Referring first to Fig. 1, a slide printing system 10 is arranged such as to print a film 14 in the form of a slide 12 (in which the film 14 is loaded in a mount 16) shown in Fig. 3 on a roll of photographic paper and to sort prints thus produced in accordance with the orders placed by individual customers. This slide printing system 10 includes various apparatuses which are separated from each other for respective steps in printing. This is because the processing time differs for each step and it is therefore necessary for each step to be provided with a particular number of apparatuses which is selected in accordance with the processing time which this particular step takes in order to eliminate any undesirable stand-by time in transfer of slides and film information between the various apparatuses and thereby to increase the efficiency of the processing executed throughout the system 10.

In the invention, a magazine-type slide printing method is adopted in order to simplify the arrangement of the slide printing system 10. More specifically, each apparatus is arranged such that a magazine 18 is detachably mounted thereon. The magazine 18 is adapted to house slides 12 which are to be processed for a multiplicity of customers and sorting cards 22 each of which identifies the top end of a series of slides 12 corresponding to one of the orders placed by the individual customers. The magazine 18 is further provided with a film information memory device which enables storage of various kinds of information such as the number of prints which are to be produced from each of the slides 12, focusing information and so forth. Accordingly, when processing on one magazine 18 has been completed, each apparatus can clear the film information employed therein so as to be ready for processing a subsequent magazine 18. Thus, it is possible to reduce the memory capacity required for each apparatus and to eliminate the need to transfer information between the associated apparatuses through cable.

A printing preparation apparatus 20 is arranged such as to load slides 12 and sorting cards 22 into a magazine 18 and transfer film information, such as the number of prints required, to the magazine 18. The printing preparation apparatus 20 is further adapted to print information, such as the number of prints required, on an SP bag 24 for housing prints and slides for each individual customer.

When the above-described processing has been completed for one magazine 18, it is removed from the printing preparation apparatus 20 and is then mounted on the supply side of an automatic printer 26. The printer 26 is arranged such as to unload the slides 12 from the magazine 18 one by one and print the picture carried by each slide 12 onto a roll of photographic paper 28 and then load the slides 12 into a magazine 18 mounted on the reception side thereof. Upon completion of this processing, the magazines 18 on the supply and reception sides of the printer 26 are removed and the magazine 18 on the supply side is returned to the printing preparation apparatus 20 and loaded with new slides 12 and sorting cards 22.

The magazine 18 on the reception side of the printer 26 and the photographic paper 28 which has been subjected to printing and developing are then mounted on a checker 30 which provides checking, for example, as to whether or not the exposure time for each of the colors is appropriate. If any defective print is found, information required for re-printing is input to the magazine 18.

When the processing at the checker 30 has been completed, the magazine 18 is removed therefrom and is then mounted on a slide discharger 34 in a final processing apparatus 32. On the other hand, the photographic paper 28 is set on an automatic cutter 36 in the final processing apparatus 32. The slide discharger 34 discharges the slides 12 and the sorting cards 22 from the magazine 18, while the automatic cutter 36 cuts the photographic paper 28 into individual frames. The pieces of the photographic paper 28 thus cut are sorted by an automatic sorter 38 into those which are appropriately printed and those which are unsatisfactorily printed. The pieces or prints of the photographic paper 28 and the discharged slides 12 are put into the SP bags 24 which are prepared for individual customers after confirmation has been made, for example, as to whether or not they are to be put into the same SP bag 24 for a single customer, or as to whether or not the respective numbers of prints and slides are coincident with those which have been stored in the magazine 18 in the printing preparation apparatus 20 (that is, the information printed on the SP bags 24). On the other hand, the sorting cards 22 are successively deposited in a sorting card box 40. It is to be noted that even if a series of slides 12 for a single customer includes only one slide 12 needing to be subjected to re-printing, none of the series of slides 12 and the associated sorting card 22 are discharged from the magazine 18.

In a case where any slide 12 which needs to be subjected to re-printing remains in the magazine 18 after the processing in the final processing apparatus 32 has been completed, this magazine 18 is set on the supply side of the printer 26 again and the above-described processings are repeated. On the other hand, when the magazine 18 is empty, it can be loaded with new slides 12 and set on the printing preparation apparatus 20 or the reception side of the printer 26.

It is to be noted that all the magazines 18 which are employed in this slide printing system 10 have the same structure, which fact advantageously improves the efficiency obtainable in using the magazines 18. However, when a magazine 18 which has already been subjected to processing at one apparatus is removed therefrom and is set on another apparatus, if this magazine 18 is incorrectly set on the wrong apparatus, the film information stored in that apparatus would be undesirably cleared. In order to prevent the occurrence of such a problem, a job number is stored in a magazine 18 which has already been subjected to processing at any one of the apparatuses. Thus, each apparatus conducts processing only when a magazine 18 with a predetermined job number is set thereon.

For example, in Fig. 1, the printing preparation apparatus 20 accepts only a magazine 18 with the job number "0", and when processing at the printing preparation apparatus 20 has been completed, the job number "1" is stored in this magazine 18. The supply side of the automatic printer 26 accepts only a magazine 18 with the job number "1", and when processing at the printer 26 has been completed, the job number of this magazine 18 is changed to the job number "0". However, this change of the job numbers does not cause the film information in the magazine 18 to be cleared. For example, if the film information in a magazine 18 is lost after the processing at the checker 30 takes place, it is possible to transfer the film information stored in the magazine 18 on the supply side of the printer 26 into the magazine 18 which has lost its film information.

Each of the apparatuses and devices in the photographic printing system 10 will be described hereinunder in detail.

Printing Preparation Apparatus 20:

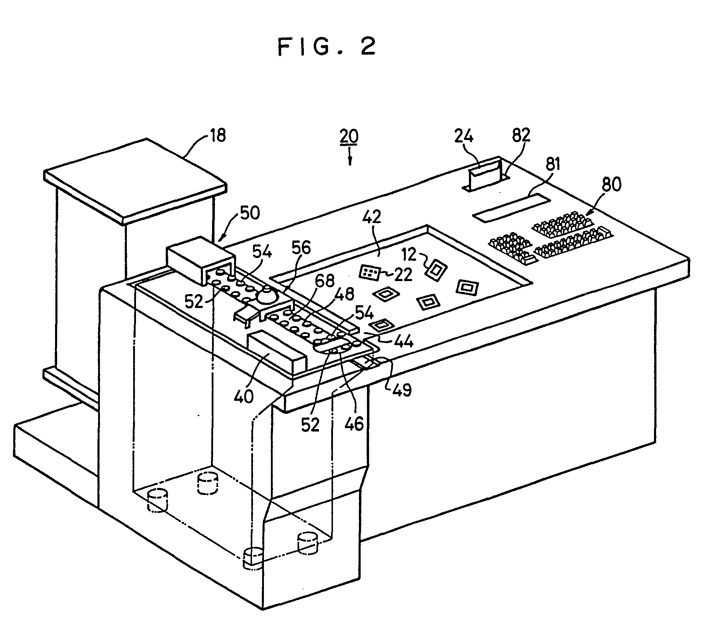

Referring to Fig. 2, the printing preparation apparatus 20 is arranged such that a series of slides 12 being processed for a single customer and one sorting card 22 which is taken out from the sorting card box 40 are placed on an illuminator 42. This illuminator 42 is translucent and is irradiated with light from its underside. The slides 12 placed on the illuminator 42 are successively inserted into a transfer opening 44 by an operator while being properly disposed in terms of the facing orientation or posture of each slide 12. The slides 12 are conveyed by means of a turntable 46 and a main conveyor section 48 and are discharged from the printing preparation apparatus 20 by a discharge section 50 such as to be loaded into a magazine 18. In this case, the slides 12 are conveyed in such a manner that each slide 12 is clamped at two edges thereof by the respective peripheral surfaces of a driving roller 52 and a press roller 54 and is conveyed by the rotation of the driving roller 52.

A film condition measuring device 56 is disposed in an intermediate portion of the main conveyor section 48. As shown in Fig. 5, the film condition measuring device 56 measures the distance H between the lower surface of the mount 16 and the film 14 of each slide 12 (a measured value for the distance H is employed as focusing information in the printer 26) and also makes a judgement as to the facing orientation of the film 14 concerned. These operations are effected by means of an optical pickup 58 which is mounted such as to be movable in a direction orthogonal to the plane of the film 14. As the optical pickup 58, one which is employed in a compact disk system or the like may be used. The optical pickup 58 is adapted to be able to detect a focusing error by irradiating the film 14 with a laser beam.

More specifically, the optical pickup 58 has a predetermined initial position. The optical pickup 58 is moved from this initial position until the focusing error becomes zero, and the distance H is measured from the amount of movement of the optical pickup 58. On the other hand, the detection of the face and back of the film 14 is effected as follows. When the film 14 is heated for a certain period of time, e.g., four seconds, the water content in its emulsion layer is decreased, which fact causes the film 14 to contract and hence curl by several microns. This curling takes place in the direction in which the emulsion layer side of the film 14 becomes a concave surface. Accordingly, it is possible for the face and back of the film 14 to be detected by suspending the movement of the optical pickup 58 in order to heat the film 14 and then detecting a change in the focusing error signal delivered from the optical pickup 58.

Sorting Card 22:

The sorting card 22 has, as shown in Fig. 4, a series of synchronizing pits 60 formed in its central portion at constant distances in the direction in which it is conveyed. Further, a combination of data pits 62 is formed such as to correspond to the synchronizing pits 60. A number which is represented by this combination of data pits 62 is written on the sorting card 22 ("487" in the case of the card 22 shown in Fig. 4) so that it is possible for the operator to confirm the number. The sorting card 22 further has a start pit 64 and a stop pit 66 respectively formed in front and at the rear of the data pits 62, and it is thereby possible to read off the data represented by the combination of data pits 62 even in the direction which is opposite to the card conveying direction. The information represented by the pits on the sorting card 22 is read off by light-projecting and -receiving devices 68 which are buried in a conveyor board 51 of the main conveyor section 48, as shown in Fig. 6. Since the synchronizing pits 60 are formed in the central portion of the sorting card 22, it is possible for the synchronising pits 60 to be read off even when the sorting card 22 is disposed upside down. It is to be noted that two sets of data pits 62, two start pits 64 and two stop pits 66 may be formed symmetrically with respect to each other and with respect to the series of synchronizing pits 60. In such a case, it is possible to read off the data represented by the combination of data pits 62 even when the sorting card 22 is disposed upside down.

**Magazine 18:**

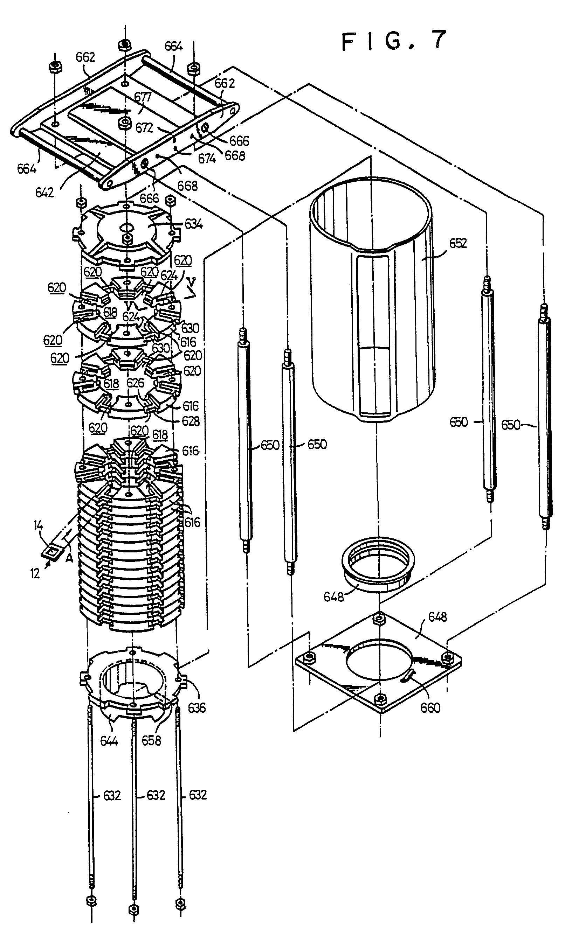

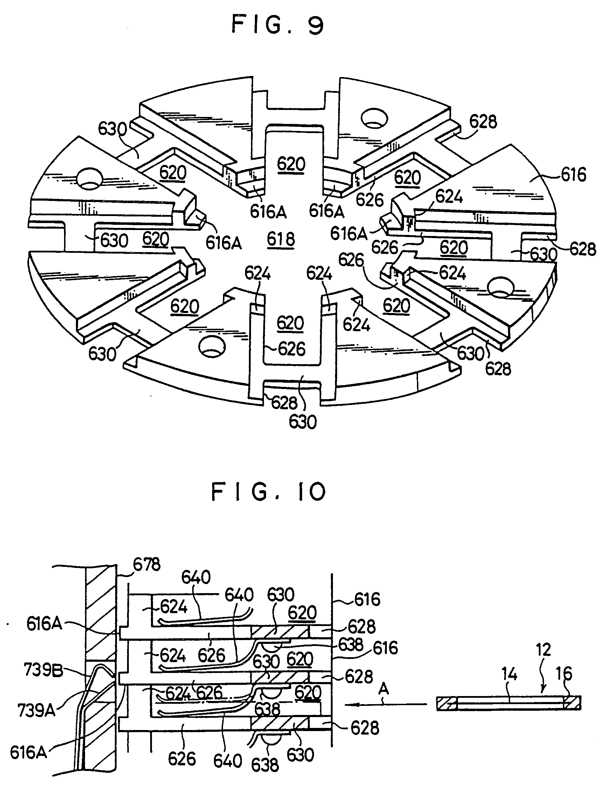

Referring next to Fig. 7, each of the magazines 18 is composed of a plurality of trays 616 which are piled up one upon another into a multistage structure, thus forming the overall shape of a hollow cylinder. Each of the trays 616 has the shape of a plate-like ring having a bore 618 in its center and is formed from a synthetic resin by means of molding. As also shown in Figs. 9 and 10, each tray 616 has eight slide housing chambers (pockets) 620 formed radially thereof such as to respectively house slides 12, each having a film 14 retained by a frame-like mount 16, and sorting cards 22. The pockets 620 are respectively constituted by grooves which are radially formed on each tray 616. One slide 12 or sorting card 22 is inserted in the direction of the arrow A into one pocket 620 such as to be housed therein.

Stoppers 624 project at the inner end of each pocket 620 in such a manner as to abut against both corners at the leading end of the slide 12 or sorting card 22 when inserted thereinto. Further, the bottom of each pocket 620 has notches 626 and 628 respectively cut therein from the inner and outer sides of the tray 616. These notches 626, 628 are rectangular in plan view. Thus, each tray 616 has a planar configuration in which it is constituted by portions which are connected together at the pockets 620 through cross pieces 630 each constituted by the portion of the bottom of each pocket 620 which is left between the notches 626 and 628.

The trays 616 are piled up one upon another such as to form a multistage structure. Connecting bolts 632 are received through the piled trays 616, and top and bottom plates 634 and 636 are respectively secured to the upper and lower ends of the piled trays 616, thus forming a cylindrical shape as a whole. In an assembled state, therefore, the upper side of each of the pockets 620 on one tray 616 is closed by the botton surface of the tray 616 which is placed thereon, thus forming a magazine 18 of a cylindrical structure with through-holes extending radially thereof.

As shown in Fig. 10, one end of a leaf spring 640 is secured to the bottom surface of each tray 616 by a rivet 638. The distal end of the leaf spring 640 presses both lateral edges of an inserted slide 12 against the bottom surface of the corresponding pocket 620, thereby preventing the slide 12 from undesirably coming out of the pocket 620.

The top plate 634 has its axis portion rotatably supported by an upper frame plate 642. On the other hand, the bottom plate 636 has a cylindrical shaft 644 projecting axially from its inner peripheral portion and is rotatably supported by a lower frame plate 648 through a bearing 646 which is mounted on the outer periphery of the cylindrical shaft 644. Four supports 650 are interposed between the upper and lower frame plates 642 and 648 in such a manner as to firmly fix them to each other.

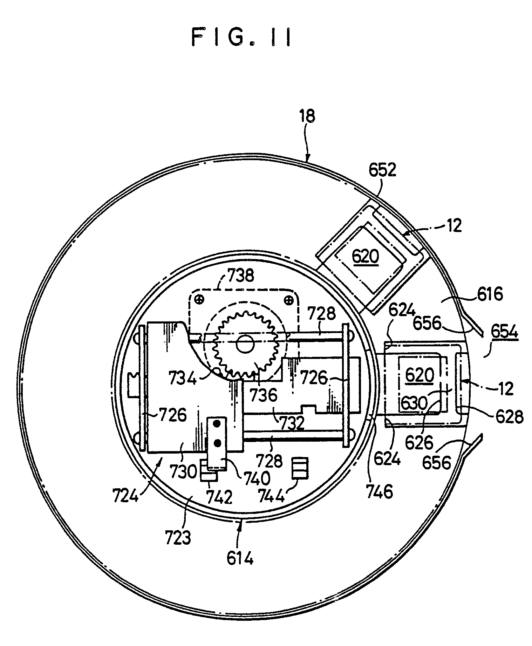

A synthetic resin cover 652 is interposed between the upper and lower frame plates 642 and 648 such as to cover the outer periphery of the piled trays 616. The cover 652 has, as also shown in Fig. 11, an opening 654 formed in one portion thereof, the longitudinal axis of the opening 654 extending axially of the piled trays 616. More specifically, since in this embodiment a plurality of trays 616 are piled up such as to form a multistage structure, each of the pockets 620 allows a slide 12 to be inserted and removed in the radial direction of the piled trays 616. In addition, the pockets 620 are arranged such that those which are formed on the respective trays 616 constitute a multistage pocket structure which has its longitudinal axis extending axially of the piled tray 616, and eight rows of pockets 620 are therefore provided around the axis of the piled trays 616. Among the eight rows of pockets 620, only one row is permitted to communicate with the outside through the opening 654.

As shown in Fig. 11, the opening 654 is defined by a protuberant portion 656 of the cover 652 which projects outwardly therefrom with a gradually narrowing shape in plan view. Accordingly, even when a slide 12 is in a state wherein it has not been completely forced into a pocket 620 and a portion of the slide 12 therefore projects from the outer end of the pocket 620, this slide 12 is properly pushed into the pocket 620 when the trays 616 are rotated within the cover 652 since at that time the projecting portion of the slide 12 is pressed inwardly by the protuberant portion 656.

The bottom plate 636 has a click groove 658 formed in a portion of its bottom surface, the click groove 658 having its longitudinal axis extending radially of the bottom plate 636. The click groove 658 receives the distal end portion of a click leaf spring 660 which has its proximal end secured to the lower frame plate 648. Thus, the rotation of the trays 616 is regulated at one position thereof in such a manner that, when the click leaf spring 660 is fitted in the click groove 658, no pocket 620 opposes the opening 654. Accordingly, when the magazine 18 is transported, no slide 12 falls through the opening 654 even if the magazine 18 is accidentally tilted.

A pair of arms 662 are respectively secured at their central portions to two edge portions of the upper frame plate 642. Grip rods 664 are stretched between the arms 662 at both ends thereof, each grip rod 664 having both ends thereof secured to the arms 662. Thus, it is possible for the operator to grip the grip rods 664 and raise the magazine 18 when it is transported.

One of the arms 662 has a pair of power supply terminals 666 and a pair of positioning bores 668 formed on its outer side. The terminals 666 are used for supplying electric power to a film information memory device (IC memory) 77 which is secured to the upper surface of the upper frame plate 642. On the other hand, the positioning bores 668 respectively receive positioning pins of an associated machine, thereby accurately positioning the magazine 18 relative to the machine. Further, the arm 662 is provided at its central portion with upper and lower photocouplers 672 and 674. When receiving a signal from an associated machine, the photocoupler 672 sends this signal to the film information memory device (IC memory) 77, while the photocoupler 674 delivers the signal processed in the memory device 77 to the associated machine.

The film information memory device 77 has stored therein data about the location of each of the slides 12, that is, information as to which slide 12 is housed in which pocket 620. In addition to the above-described data, the memory device 77 can store printing correction conditions for each film 14, the number of prints required and so forth.

Construction of Magazine Driver 214:

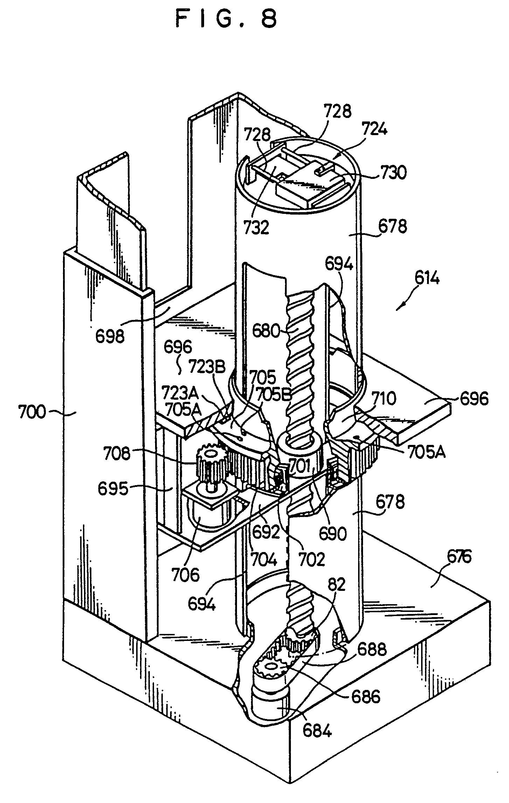

As also shown in Fig. 8, a magazine driver 614 includes a tubular member 678 standing on the upper surface of a machine board 676. A feed screw 680 is rotatably supported at the axis portion of the tubular member 678 in such a manner that the longitudinal axis of the feed screw 680 extends vertically. A gear 682 is secured to the lower end portion of the feed screw 680, while a gear 686 is secured to the output shaft of a motor 684 which is mounted on the machine board 676, and a timing belt 688 is stretched between the gears 682 and 686. Thus, the feed screw 680 is rotated about its vertical axis by the rotation of the motor 684.

The feed screw 680 has a ball screw nut 690 screwed thereon. The nut 690 is secured to the central portion of a support plate 692. Both end portions of the support plate 692 respectively extend through openings 694 which are formed in the tubular member 678 in such a manner that the longitudinal axis of each of the openings 694 extends longitudinally of the tubular member 678. The ends of the support plate 692 are then secured to a lifting board 696 through respective brackets 695. The lifting board 696 has the tubular member 678 extending through its central portion, one end of the lifting board 696 being secured to a lifting wall 698. The lifting wall 698 is adapted to be able to move vertically while being guided by a fixed wall 700 which stands on the machine board 676.

A cylindrical wall 701 is secured to the support plate 692, and an externally toothed ring gear 704 is rotatably supported by the cylindrical wall 701 through a bearing 702. The ring gear 704 is meshed with a gear 708 secured to the output shaft of a motor 706 which is mounted on the support plate 692. Thus, it is possible for the ring gear 704 to rotate around the tubular member 678 by means of the driving force of the motor 706.

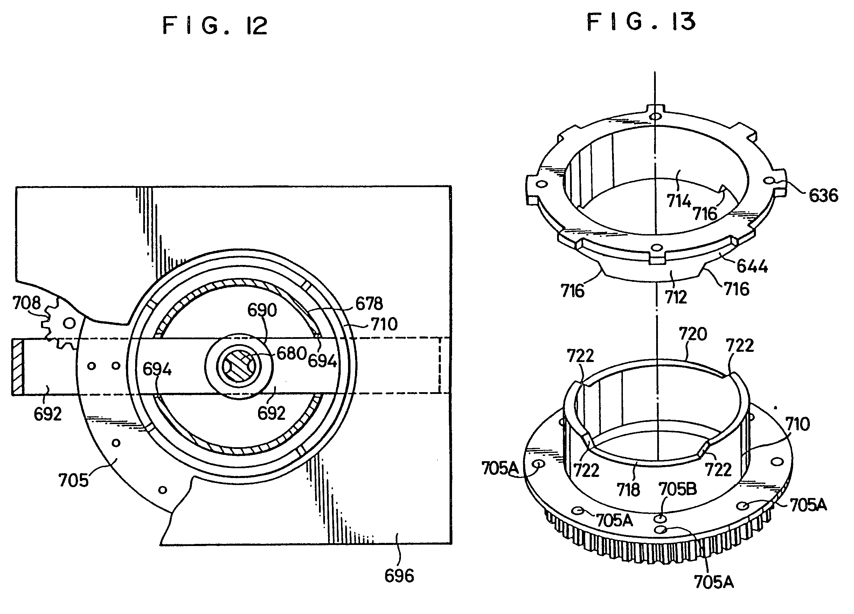

The lower end portion of a cylindrical mounting board 710 is secured to the externally toothed ring gear 704. The mounting board 710 extends through the area between the lifting board 696 and the tubular member 678 in such a manner that the upper end of the mounting board 710 projects upwardly beyond the lifting board 696. As shown in Fig. 13, the cylindrical shaft 644 of the bottom plate 636 opposes the mounting board 710. Thus, the magazine 18 is mounted on the lifting wall 698.

As shown in Fig. 13, the cylindrical shaft 644 has a pair of engagement projections 712 and 714 projecting therefrom toward the cylindrical mounting board 710, each engagement projection having engagement slanted surfaces 716 formed on two sides thereof. On the other hand, the mounting board 710 is formed with engagement recesses 718 and 720 for respectively receiving the engagement projections 712 and 714. Each of the engagement recesses 718 and 720 has engagement slanted surfaces 722 which respectively abut against the engagement slanted surfaces 716.

The engagement projection and recess 712, 718 have the same circumferential length as each other, and the engagement projection and recess 714, 720 also have the same circumferential length as each other. In this case, however, the circumferential length of the engagement projection and recess 712, 718 is shorter than that of the engagement projection and recess 714, 720. Accordingly, it is impossible for the engagement projection 714 to be inserted into the engagement recess 718. Thus, the magazine 18 is mounted on the cylindrical mounting board 710 only at a predetermined position in its rotation about its axis. After the magazine 18 has been mounted on the mounting board 710, the trays 616 can be rotated around the tubular member 678 by the rotation of the mounting board 710.

The externally toothed ring gear 704 has a collar portion 705 extending radially from the upper end thereof. The collar portion 705 has eight pocket position detecting bores 705A formed therein in such a manner that they are spaced about the axis of the ring gear 704 such as to correspond to the eight rows of pockets 620 which are arranged about the axis of the magazine 18 when mounted on the mounting board 710. These pocket position detecting bores 705A can be detected by a sensor 723A which is mounted on the bottom surface of the lifting board 696. Further, a loading/unloading position detecting bore 705B is formed in the collar portion 705 adjacent to one of the eight pocket position detecting bores 705A. The bore 705B can be detected by a sensor 723B which is disposed in parallel to the sensor 723A.

As shown in Figs. 8 and 11, a push-out means 724 is mounted on a top plate 723 of the tubular member 678. In the push-out means 724, a pair of guide bars 728 are stretched between a pair of guide brackets 726 which stand on the top plate 723. A moving board 730 is slidably supported on the guide bars 728. A plate-like pusher 732 is secured to the moving board 730 in such a manner that it is possible for the pusher 732 to move together with the moving board 730.

Further, a rack 734 is secured to the moving board 730 and is meshed with a pinion 736 which is rotatably supported by the tubular member 678. The pinion 736 is rotated by means of the driving force of a motor 738, thereby allowing the moving board 730 to move along the guide bars 728.

Accordingly, as the motor 738 is actuated, the pusher 732 pushes out a slide 12 which is disposed at an unloading/reloading position from the associated pocket 620, and the slide 12 thus pushed out is taken out through the opening 654 of the cover 652. More specifically, when a pocket 620 is disposed within the moving locus of the pusher 732, the slide 12 housed in this pocket 620 is placed at the unloading/reloading position. In the magazine 18, the cylindrical mounting board 710 is, as will be clear from Fig. 8, vertically moved by means of the driving force of the motor 684 together with the lifting board 696 and is rotated by means of the driving force of the motor 706, whereby a desired pocket 620 is aligned with the unloading/reloading position.

For the purpose of properly aligning a desired pocket 620 with the unloading/reloading position, a pair of optical fibers 739A and 739B are mounted on the tubular member 678 such as to face outwardly thereof and oppose each other, as shown in Fig. 10, and light is projected from the optical fiber 739A and received by the optical fiber 739B. In this case, the quantity of light received by the optical fiber 739B differs depending upon whether or not any of the ribs 616A which project radially from the inner end of each of the trays 616 is present within the optical path of the light projected from the optical fiber 739A. Therefore, any difference in terms of the quantity of light received by the optical fiber 739B is detected, and the height of the magazine 18 is thereby controlled. The rotation of the magazine 18 is suspended when the sensor 723A detects a particular pocket position detecting bore 705A, and a row of pockets 620 which includes a desired pocket 620 is thereby disposed at the unloading/reloading position.

It is to be noted that the rotational position of the magazine 18 is not known at the time when the magazine driver 614 is started after the magazine 18 has been mounted on the cylindrical mounting board 710. The motor 706 is therefore adapted to rotate the magazine 18 until the loading/unloading position detecting bore 705B is detected by the sensor 723B.

The moving board 730 has a striker 740 projecting therefrom in such a manner as to oppose sensors 742 and 744 which are previously mounted on the top plate 723 of the tubular member 678 at a predetermined distance. Thus, it is possible to detect the amount of movement of the moving board 730 from the position wherein the plate-like pusher 732 is in a state such as that shown in Fig. 11 to the position wherein the pusher 732 which has passed through a notch 746 formed at the upper end portion of the tubular member 678 pushes out the slide 12 at the unloading/reloading position from the associated pocket 620 through the opening 654.

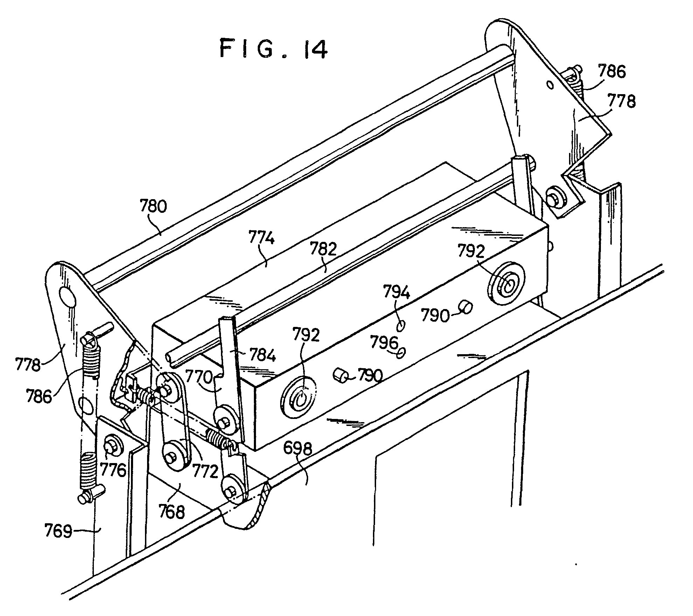

Fig. 14 shows a structure for securing the magazine 18 which is mounted at the upper end portion of the lifting wall 698. Each of parallel links 770 and 772 is pivotally supported at one end thereof by the upper end portion of the lifting wall 698 through a bracket 768. The respective upper end portions of the links 770 and 772 are pivotally supported by a connecting block 774, thereby allowing the connecting block 774 to come in and out of contact with the magazine 18 while maintaining its horizontal state.

Handle levers 778 are pivotally supported through pins 776 by brackets 769, repectively, which are secured to the lifting wall 698. A grip rod 780 is secured to the respective distal ends of the handle levers 778, and a pin 782 is stretched between the respective intermediate portions of the handle levers 778. The pin 782 opposes arms 784 each projecting from one end of each of the parallel links 770. Thus, when the operator pivots the grip rod 780 about the pins 776, the connecting block 774 is moved toward the magazine 18 through the parallel links 770.

A tension coil spring 786 is stretched between each of the handle levers 778 and the associated bracket 769. By pulling and pivoting the tension coil springs 786 in such a manner that their axes respectively pass the prolongation lines of the axes of the pins 776, it is possible for the connecting block 774 to be selectively placed at two positions, that is, one in which the connecting block 774 is separated from the magazine 18 and the other in which the former is in contact with the latter. More specifically, when each of the tension coil springs 786 is disposed on one side of the prolongation line of the axis of the corresponding pin 776, the springs 786 maintain the connecting block 774 in its most extreme position with respect to the magazine 18. If, in this state, the operator moves the grip rod 780 in such a manner that the connecting block 774 is moved toward the magazine 18, the axis of each of the tension coil springs 786 moves to the other side of the prolongation line of the axis of the corresponding pin 776, whereby the springs 786 cause the connecting block 774 to approach the magazine 18.

The connecting block 774 is provided with positioning pins 790, power supply terminals 792 and photocouplers 794, 796, which respectively correspond to those which are provided on the magazine 18. Thus, the magazine 18 is vertically moved as well as rotated by the magazine driver 614, and the slides 12 and the sorting cards 22 are thereby successively loaded into the slide housing chambers 620, respectively, through the discharge section 50 which is shown in Fig. 2. It is to be noted that a magazine driver 614 which is shown in Fig. 8 is also disposed on the reception side of the automatic printer 26 shown in Fig. 1. Further, pushers 732 are respectively provided on the supply side of the automatic printer 26, the checker 30 and the slide discharger 34, thereby allowing the slides 12 and the sorting cards 22 to be pushed out of the respective pockets 620 by the corresponding pushers 732 which are located inside the corresponding magazines 18.

It is to be noted also that film information is input to the printing preparation apparatus 20 through a keyboard 80 shown in Fig. 2 and is transferred to the film information memory device 77 on a magazine 18 after all the slides 12 have been loaded into the magazine 18. A display 81 is provided on the printing preparation apparatus 20 at the side of the keyboard 80 which is remote from the operator. The display 81 permits the operator to confirm the information input through the keyboard 80 and display the operating conditions of the printing preparation apparatus 20 and the like. An insertion opening 82 is provided on the printing preparation apparatus 20 at the side of the display 81 which is remote from the operator. When an SP bag 24 is inserted into the insertion opening 82, the number of prints required and other information are printed on the SP bag 24 by a printer (not shown).

Processing at Printing Preparation Apparatus 20:

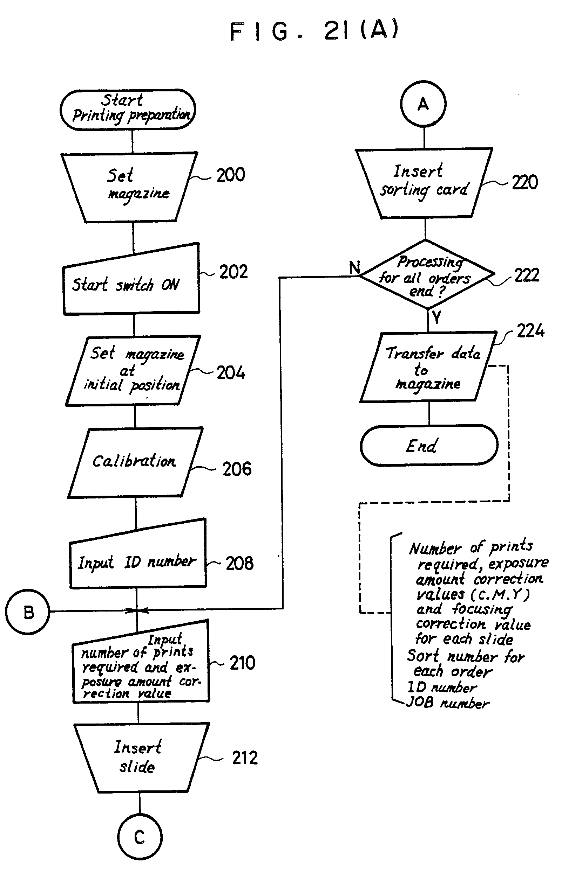

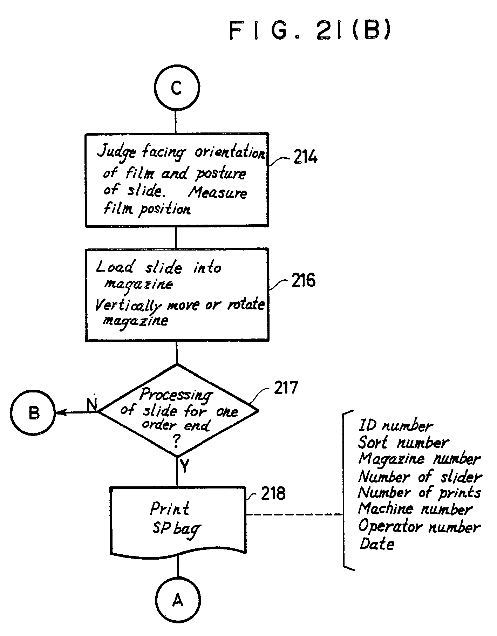

The processing at the printing preparation apparatus 20 will now be described with reference to Fig. 21.

A magazine 18 is set on the printing preparation apparatus 20 (Step 200), and a start switch (not shown) is turned ON (Step 202). Thereupon, the magazine 18 is moved to the initial position by the magazine driver 614 (Step 204). Then, calibration is effected by the film condition measuring device 56 (Step 206).

More specifically, in place of the slide 12 shown in Fig. 5, a reference plate (not shown) is mounted on the conveyor board 51, and the optical pickup 58 is first lowered to its lower-limit position and then raised. The optical pickup 58 is raised until the focusing error becomes zero. When this condition is detected, the position of the optical pickup 58 with respect to the upper surface of the conveyor board 51 is obtained, and calibration is thereby effected.

Next, one of a series of ID numbers is input through the keyboard 80 (Step 208). The ID numbers are serial numbers which represent the order of magazines 18 in which they are to be processed by, for example, the printing preparation apparatus 20. Then, the number of prints required for each of the slides 12 and the values for correction of exposure amount are input through the keyboard 80 (Step 210). These "exposure amount correction values" are those which are employed to correct an exposure amount which is automatically determined by the automatic printer 26.

Then, each slide 12 having the above-described data input thereto is inserted into the transfer opening 44 (Step 212) and is conveyed by means of the turntable 46 and the main conveyor section 48. While doing so, the face and back of the film 14 of the slide 12 and the distance H shown in Fig. 5 are measured by the film condition measuring device 56 (Step 214). It is to be noted that if the film 14 of the slide 12 is disposed upside down, this slide 12 is discharged into a discharge opening 49. In such a case, the operator turns this slide 12 and inserts it from the discharge opening 49, the slide 12 thus being conveyed by the turntable 46 and the main conveyor section 48 again. The slide 12 is then discharged from the discharge section 50 in Step 216 and is loaded into one of the slide housing chambers 620 of the magazine 18. Thereafter, the magazine 18 is rotated by the magazine driver 614 in such a manner that a subsequent slide housing chamber 620 opposes the discharge section 50.

If it is judged in Step 217 that a series of slides 12 for a single customer has not yet been loaded into the magazine 18, the process returns to Step 210. On the other hand, when the loading of a series of slides 12 for a single customer has been completed, the SP bag 24 inserted into the insertion opening 82 is printed with various information, such as an ID number, a sort number, a magazine number, the number of slides, the number of prints required, a machine number, an operator number and date, in Step 218. Then, a sorting card 22 is inserted into the transfer opening 44 in Step 220 and is loaded into the magazine 18 in a manner similar to the above. It is to be noted that, in the course of conveyance of the sorting card 22 by the main conveyor section 48, the pit information (sort number) carried by the sorting card 22 is read off by the light-projecting and -receiving devices 68. If the above-described processing of the slides 12 has not yet been completed for all the customer orders in relation to this particular magazine 18 (Step 222), the process returns to Step 210, and the above-described series of processings are repeated.

When the loading of the slides 12 for all the orders has been completed, the data stored in the printing preparation apparatus 20 is transferred to the magazine 18 in Step 224. The data includes various information about each slide 12, such as the number of prints required, exposure amount correction values, a focusing correction value (the distance H shown in Fig. 5), a sort number which divides two adjacent series of slides 12 for two different customers and an ID number, together with a job number. Thus, the processing for a single magazine 18 is ended.

Printer 26:

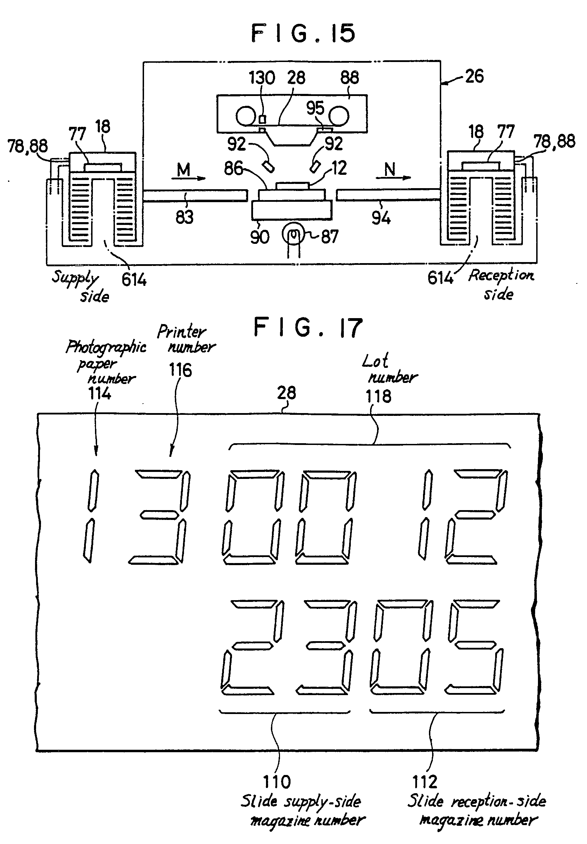

The automatic printer 26 will be described hereinunder with reference to Fig. 15. The automatic printer 26 is arranged such that magazines 18 are respectively mounted on the magazine drivers 614 which are disposed on the supply and reception sides of the printer 26. The slides 12 and the sorting cards 22 which are pushed out by the pusher 732 of the magazine driver 614 on the supply side are successively conveyed by a conveyor section 83 in the direction of the arrow M in Fig. 15 and are mounted on a printing board 86. A light source 87 is disposed below the printing board 86, whereby the picture carried by the film 14 on each slide 12 is printed on a roll of photographic paper 28 loaded on a printing section 88 which is provided above the slide 12. The printing board 86 is adapted to be vertically movable by the action of an auto-focus mechanism 90. Thus, the image of the picture which is formed on the photographic paper 28 is controlled such as to be in focus on the basis of the above-described focusing correction value. The quantity of light transmitted by the slide 12 is measured by film density detectors 92, whereby a film density is detected. An appropriate exposure time is determined by the thus detected film density and the exposure amount correction value stored in the film information memory device 77. When the exposure has been completed, the slide 12 is conveyed by a conveyor section 94 in the direction of the arrow N in Fig. 15 and is loaded into one of the slide housing chambers (pockets) 620 in the magazine 18 on the reception side of the printer 26.

It is to be noted that the sorting cards 22 are simply passed on the printing board 86. Distinction between a slide 12 and a sorting card 22 is made on the basis of the information stored in the film information memory device 77. It is to be noted also that the printing section 88 includes a numeral printing device 95 disposed in close proximity to the roll of photographic paper 28. The numeral printing device 95 is constituted by a seven-segment LED (light-emitting diode) which enables numerals to be directly printed on the photographic paper 28 as shown in Fig. 15.

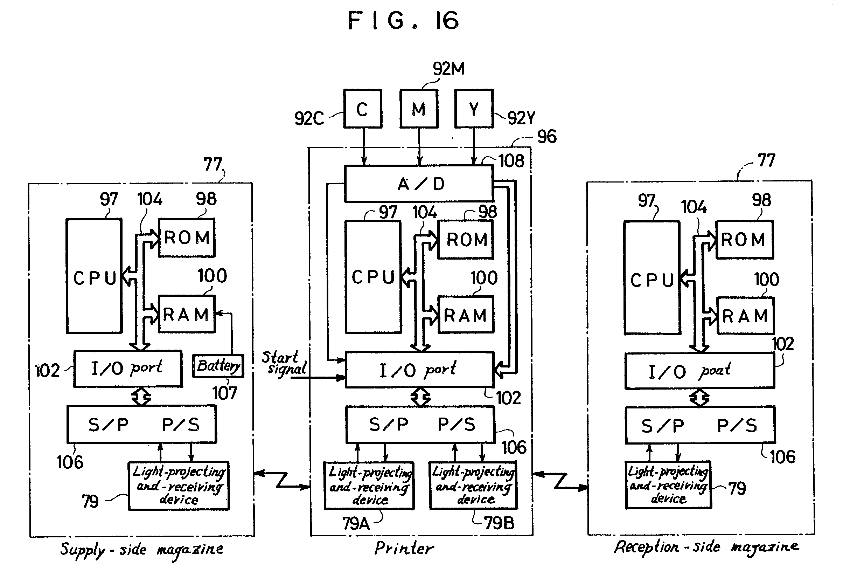

Referring next to Fig. 16, there are shown a film information processor 96 which is incorporated in the automatic printer 26, and film information memory devices 77 which are respectively incorporated in the magazines 18 on the supply and reception sides of the printer 26. Each of the film information memory devices 77 is constituted by a microcomputer in which a CPU 97, an ROM 98, an RAM 100 and an I/O port 102 are interconnected by means of a bus 104. The I/O port 102 is connected with a signal converter 106 which converts serial data into parallel data and vice versa. A light-projecting and -receiving device 79 is connected to the signal converter 106.

Accordingly, serial optical signals received by the light-projecting and -receiving device 79 are converted into parallel signals and are then input to the I/O port 102, or the data which is output from the I/O port 102 is converted into serial optical signals by the signal converter 106 which are are then output from the light-projecting and -receiving device 79. The CPU 97 is adapted to process data in accordance with programs stored in the ROM 98.

It is to be noted that, when the magazine 18 is removed from the magazine driver 614, the data stored in the RAM 100 is automatically held by means of a battery 107.

The film information processor 96 has a signal converter 106 connected with light-projecting and -receiving devices 79A and 79B such as to correspond to the supply and reception sides of the printer 26. Further, film density detectors 92C, 92M and 92Y for cyan, magenta and yellow, respectively, are connected to an I/O port 102 through an A/D converter 108. The arrangement of the other portion of the film information processor 96 is similar to that of each film information memory device 77.

Processing at Printer 26:

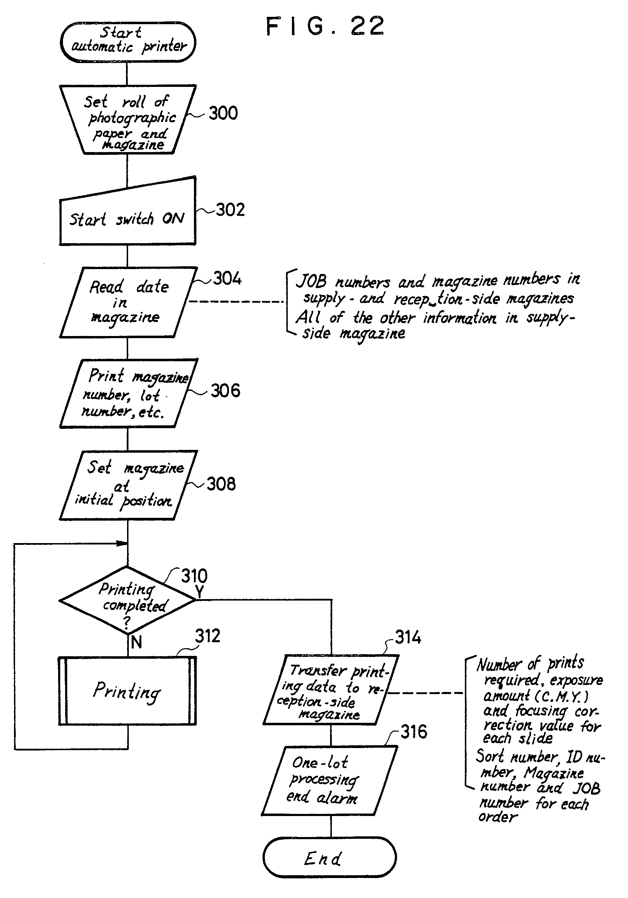

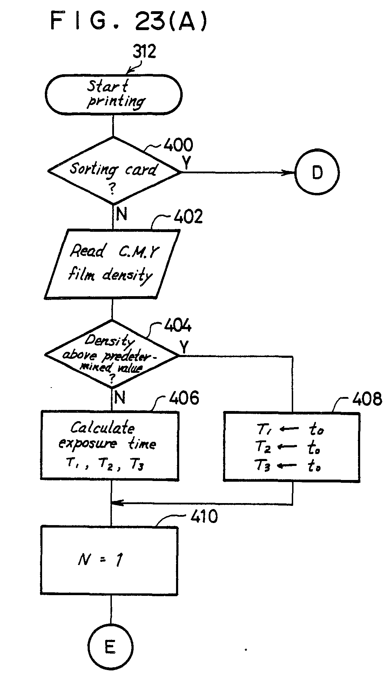

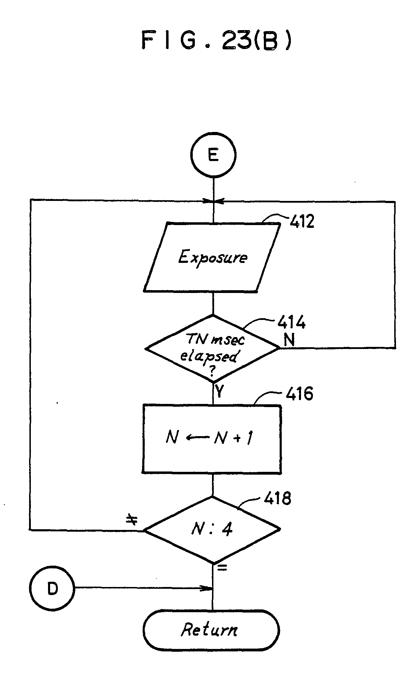

The processing at the automatic printer 26 will now be described in accordance with the flow charts respectively shown in Figs. 22 and 23.

In Step 300, a roll of photographic paper 28 is set on the printing section 88, and magazines 18 are respectively set on the magazine drivers 614 on the supply and reception sides of the printer 26. Then, a start switch (not shown) of the printer 26 is turned ON to start the printer 26 in Step 302. Then, the film information processor 96 reads off job numbers which have been respectively stored in the RAMs 100 in the magazines 18 on the supply and reception sides of the printer 26 in step 304.

The following processings are executed only when the job number of the magazine 18 on the supply side is "1" and that of the magazine 18 on the reception side is "2", as shown in Fig. 1.

Then, the film information processor 96 reads off magazine numbers which have respectively been stored in the ROMs 98 in the magazines 18 on the supply and reception sides of the printer 26 and all the information stored in the RAM 100 in the magazine 18 on the supply side. This information includes the pieces of information which are shown in Step 224 in Fig. 21.

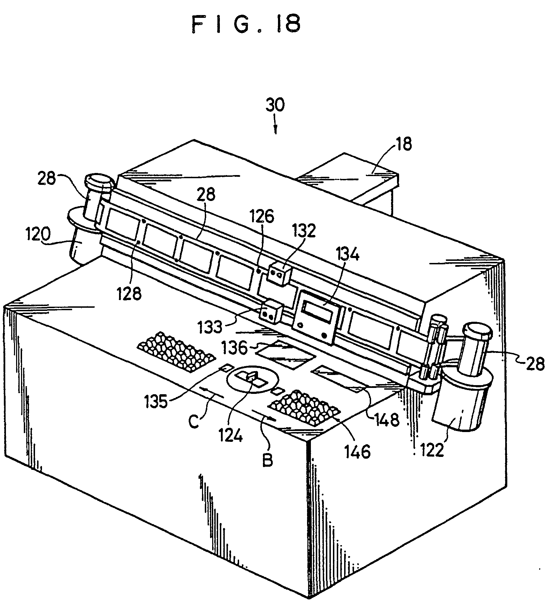

In Step 306, the photographic paper 28 is printed with a slide supply-side magazine number 110, a slide reception-side magazine number 112, a photographic paper number 114, a printer number 116 and a lot number 118 in a manner such as that shown in Fig. 17. The slide reception-side magazine number 112 is used in the checker 30 and the final processing apparatus 32 to make identification as between a roll of photographic paper 28 printed with the pictures carried by the films 14 of the slides 12 and the magazine 18 which is loaded with these slides 12. It is possible by virtue of the number 112 to make such identification without the need to unload any slide 12 from the magazines 18. Further, the slide reception-side magazine number 112 is a numeral which has previously been stored in the ROM 98, and there is therefore no fear of any slide reception-side magazine number 112 being erroneously printed such as would be involved in the arrangement in which the operator inputs a number 112 through a keyboard. The slide supply-side magazine number 110 is used to transfer the data stored in the supply-side magazine 18 to the reception-side magazine 18 in case the data in the reception-side magazine 17 is lost by an accident. The photographic paper number 114 is a serial number which is used when a plurality of rolls of photographic paper 28 correspond to a single magazine 18. The printer number 116 identifies a particular automatic printer 26 in which the photographic paper 28 concerned has been printed in the case of employing a plurality of automatic printers 26. Further, the lot number 118 represents the order of a particular magazine 18 processed in the automatic printer 26 during a particular day.

Then, the magazines 18 are respectively moved to their initial positions by the associated magazine drivers 614 in Step 308. Then, confirmation is made in Step 310 as to whether or not printing has already been completed for all the slides 12 in the supply-side magazine 18. If NO, printing is effected in Step 312. If YES is the answer of the judgement made in Step 310, the process proceeds to Step 314, in which the automatic printer 26 transfers the data read in Step 304 and the data obtained by the printer 26 to the reception-side magazine 18. The data obtained by the printer 26 includes exposure amounts with respect to cyan, magenta and yellow. Further, the job number of the reception-side magazine 18 is changed into "2". Then, an alarm is sounded in Step 316 in order to apprise the operator of the end of processing for one lot.

The following is a description of the processing in the above-described Step 312 in accordance with the flow chart shown in Fig. 23. A judgement is made in Step 400 as to whether or not the one which is mounted on the printing board 86 is a sorting card 22 on the basis of the data read in Step 304. If NO, film densities with respect to cyan, magenta and yellow are read by means of the film density detectors 92C, 92M and 92Y in Step 402. Then, a judgement is made in Step 404 as to whether or not all the detected film densities are above their respective predetermined values. If NO, respective exposure times T1, T2 and T3 for cyan, magenta and yellow are calculated on the basis of the detected film densities in Step 406. If YES is the result of the judgement made in Step 404, each of the respective values for the exposure times T1, T2 and T3 is set such as to be equal to a constant value $t_0$ in Step 408.

When the processing in either Step 406 or Step 408 has been completed, the value for N is set at "1" in step 410. The N value "1" corresponds to cyan, "2" magenta, and "3" yellow. Then, the photographic paper 28 is subjected to exposure for TN mm/sec. (Steps 412 and 414). Then, the value for N is incremented (Step 416). When the value for N is not "4", the process returns to Step 412; when the value for N is "4", printing for a single slide 12 is ended (Step 418).

The reason why each of the values for the exposure times is set such as to be equal to a constant value in the case where all the detected film densities are above their respective predetermined values is that a relatively high film density takes a relatively long exposure time, while an increase in the exposure time in accordance with the film density has substantially no effect on the finished state of a print. Accordingly, it is advantageously possible to reduce the time required for processing in the automatic printer 26 without deteriorating the finished state of a print.

Checker 30:

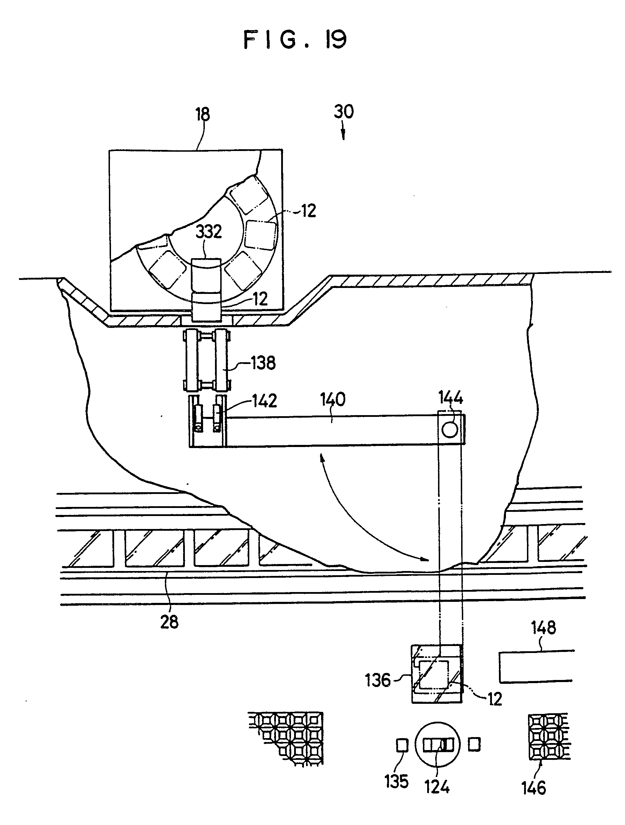

The checker 30 will be described hereinunder with reference to Figs. 18 and 19.

The checker 30 has takeup devices 120 and 122 disposed at both side ends of the upper portion thereof in such a manner that a roll of photographic paper 28 can be wound up in two directions. More specifically, as an operating knob 124 is moved in the direction of the arrow B, the photographic paper 28 is moved in the direction B by means of the takeup device 122. On the other hand, as the operating knob 124 is moved in the direction of the arrow C, the photographic paper 28 is moved in the direction C by means of the takeup device 120.

The roll of photographic paper 28 is provided at boundaries between frames with cutting marks 126 and order sorting marks 128. These marks are constituted by pinholes which are formed during a printing operation by a perforator 130 which is provided in the printing section 88 (shown in Fig. 15). The cutting marks 126 and the order sorting marks 128 are respectively detected by photosensors 132 and 133 which are so disposed as to oppose them.

A window 134 is provided above the surface of the photographic paper 28 in such a manner as to oppose a single frame on the paper 28. The arrangement is such that, as a slide unloading switch 135 is turned ON, the slide 12 which corresponds to the picture on the photographic paper 28 which is located within the window 134 is unloaded from the magazine 18 and is moved below an illuminator 136. More specifically, as shown in Fig. 19, the slide 12 which is pushed out by the pusher 732 is conveyed by a belt conveyor 138 and is then clamped by leaf springs 142 which are provided at one end of an arm 140. The other end of the arm 140 is pivotally supported by a shaft 144 so that the arm 140 is pivotal about the shaft 144. Accordingly, the slide 12 is moved below the illuminator 136.

When the operator judges that a picture on the photographic paper 28 needs to be re-printed, he inputs information required when effecting re-printing through a keyboard 146 while examining the unsatisfactorily printed picture and the slide 12 corresponding thereto. The values thus input are confirmed through a display 148. The information for re-printing is transferred from the checker 30 to the magazine 18.

It is to be noted that the identification between a picture on the photographic paper 28 and the corresponding slide 12 is effected in such a manner that the associated cutting mark 126 and order sorting mark 128 are respectively read off by photosensors 132 and 133 and checked against the film information stored in the magazine 18.

Slide Discharger 34:

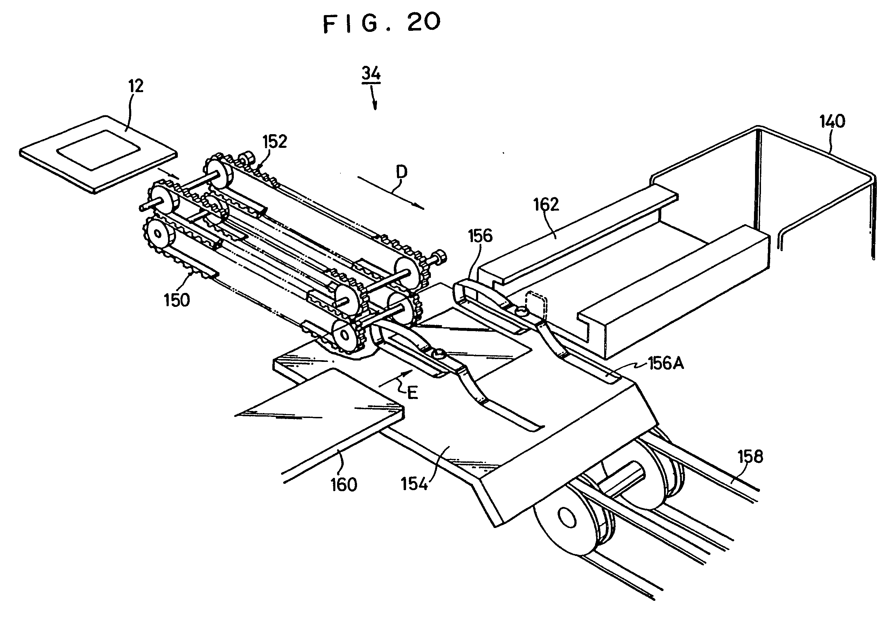

The slide discharger 34 will be described hereinunder with reference to Fig. 20.

Driving belts 150 are resiliently contacted by respective press belts 152 which are pressed by respective springs (not shown). Thus, a slide 12 which is pushed out by the pusher 732 shown in Fig. 8 is clamped by the belts 150 and 152 and is conveyed in the direction of the arrow D shown in Fig. 13. The slide 12 thus fed out is pressed by leaf springs 156 which are mounted on a base plate 154. This slide 12 is pushed off the base plate 154 by a slide 12 fed out subsequently thereto and is then mounted on driving belts 158. The conveying speed of the driving belts 158 is set such as to be sufficiently slower than that of the driving belts 150 that slides 12 are successively conveyed while being piled up one upon another. Accordingly, it is advantageously easy for the operator to take out en bloc a series of slides 12 thus piled up and put them into the corresponding SP bag 24.

The sorting card 22 which is conveyed by the driving belts 150 and mounted on the base plate 154 is pressed by a pusher 160 in the direction of the arrow E in such a manner as to be pushed out into a guide 162. The sorting card 22 thus pushed out is then pushed out into a sorting card box 40 by two sorting cards 22 which follow the former.

The slide discharger 34 is once suspended when having processed slides 12 and a sorting card 22 for a single customer. In this suspended state, one slide 12 is clamped by the respective distal end portions 156A of the leaf springs 156, while two sorting cards 22 are mounted on the guide 162. On the other hand, the automatic cutter 36 and the automatic sorter 38, which are shown in Fig. 1, are suspended when completing the processing for a single customer in a manner similar to that of the slide discharger 34. Thus, it is possible for the operator to provide a visual check on the print at the end of a series of prints for a single customer.

Accordingly, it is possible for the operator to make confirmation as to whether or not that print is coincident with the picture carried by the slide 12 which is clamped by the distal end portions 156A of the leaf springs 156. Further, it is possible to check as to whether or not the sort numbers of two sorting cards remaining on the guide 162 are consecutive and also to check the sort numbers against the sort numbers printed on the SP bags 24.

When the sorting card box 40 is filled up with sorting cards 22, the sorting card box 40 is removed from the slide discharger 34 and is then set on the printing preparation apparatus 20 in a manner such as that shown in Fig. 2.

Processing at Final Processing Apparatus 32:

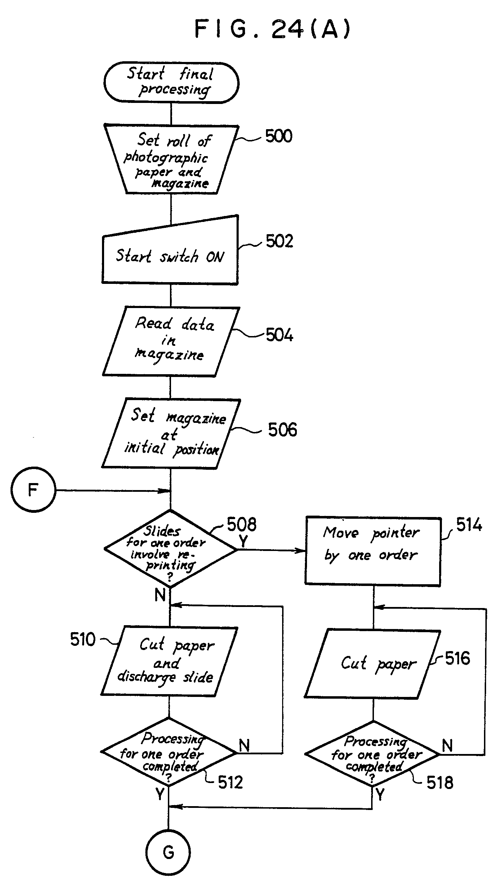

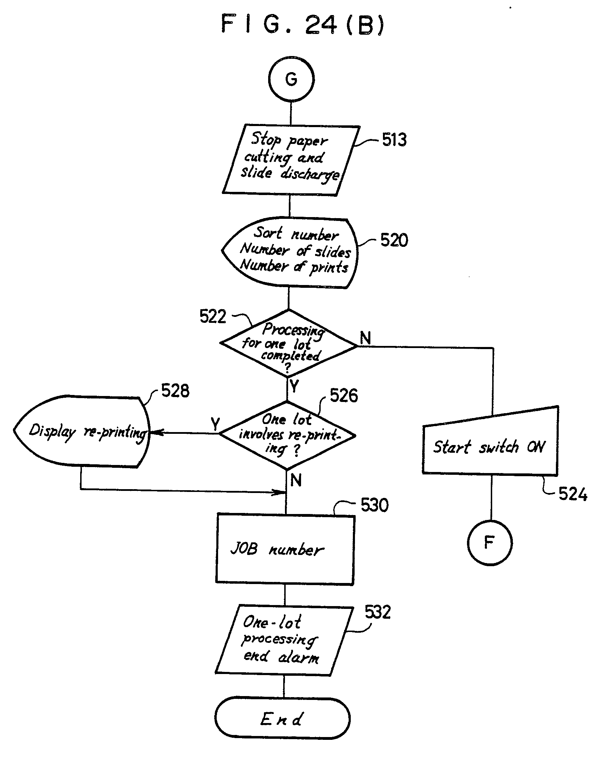

The following is a description of the processing at the final processing apparatus 32 in accordance with the flow chart shown in Fig. 24.

In Step 500, a roll of photographic paper 28 is set on the automatic cutter 36, and a magazine 18 is set on the slide discharger 34. Then, a start switch (not shown) of the final processing apparatus 32 is turned ON in Step 502. Thereupon, the data in the magazine 18 is read into the slide dicharger 34 in Step 504. Then, the magazine 18 is moved to the initial position by the magazine driver 614 in Step 506. A judgement is made in Step 508 as to whether or not a series of slides 12 for a single customer which is to be discharged subsequently includes any slide which is required to be subjected to re-printing on the basis of the data read off in Step 504. If NO, the roll of photographic paper 28 is cut into frames by the automatic cutter 36 in accordance with the cutting marks 126 and the order sorting marks 128 in Step 510. In addition, the slides 12 in the magazine 18 are discharged by the slide discharger 34. When the above-described processing of the prints and slides 12 for a single customer has been completed (Step 512), the cutting of the photographic paper 28 and the discharge of slides 12 are suspended (Step 513).

If the judgement made in Step 508 indicates that there is even a single slide 12 within a series of slides 12 for a single customer which is to be subjected to re-printing, a pointer in the memory device 77 which represents the slides 12 which are to be discharged is moved by an amount corresponding to this series of slides 12. In consequence, this series of slides 12 is left in the magazine 18 and not discharged by the slide discharger 34. Then, the photographic paper 28 is cut by the automatic cutter 36 until a series of prints for a single customer is prepared in Step 516. When a series of prints for a single customer order has been cut (Step 518), the cutting of the photographic paper 28 is suspended in Step 513.

Then, the sort number, the number of slides and the number of prints are displayed on a display in Step 520. After confirming the displayed information, the operator puts the prints and the slides 12 into the corresponding SP bag 24. When the processing for all the slides (except for any series of slides 12 for a single customer order which includes at least one slide 12 which requires to be re-printed) in the magazine 18 has been completed (Step 522), the start switch is turned ON in Step 524, and the process returns to the above-described Step 508. When the processing for one lot has been completed (Step 522), a judgement is made (Step 526) as to whether or not any slide 12 which is to be subjected to re-printing remains in the magazine 18. If YES, this fact is displayed (Step 528). Then, the job number stored in the film information memory device 77 incorporated in the magazine 18 is changed in Step 530. In other words, when there are no slides 12 which need to be subjected to re-printing, the job number is changed to "0"; otherwise, the number is changed to "4" (see Fig. 1). Then, an alarm is sounded in Step 532 to apprise the operator of the end of processing for one lot.

## Claims

1. A photographic printing system including a printer (26) for printing pictures on a roll of photographic paper (28); a supply-side magazine (18) detachably mounted on the supply side of said printer and adapted to supply said printer with slides (12) which are to be subjected to printing and slide film information; a reception-side magazine (18) detachably mounted on the reception side of said printer (26) and adapted to receive from said printer the slides which have been subjected to printing and slide film information, composed by slide film information obtained in said printer added to said supplied slide film information, wherein information reading/writing means (79A, 79B) of the printer are provided to correspond to information transfer means (79) of an attached magazine, and wherein each of said magazines (18) has a plurality of slide housing chambers (620) and film information memory means (77) for storing film information in correspondence with each of said slide housing chambers.

2. A photographic printing system according to claim 1, wherein said printer (26) has a magazine distinguishing sign printing means (95) which receives magazine distinguishing sign information (79) from said magazines and prints magazine distinguishing signs (110, 112) on one end portion of a roll of photographic paper (28), said signs enabling said supply- and reception-side magazines (18) to be distinguished from each other.

3. A photographic printing system according to claim 1, wherein said slide housing chambers (620) are loaded with slides (12) and sorting cards (22) in such a manner that the slides are sectioned for each of the orders placed by individual customers and one sorting card is disposed in the slide housing chamber (620) at one end of the chambers housing a series of slides for a single customer, each of said sorting cards (22) being provided with a sign (60, 62, 64, 66) which represents each series of slides for an individual customer, whereby a series of slides (12) for one customer is processed separately from those for other customers.

4. A photographic printing system according to Claim 3, wherein the sign (60, 62, 64, 66) provided on each of said sorting cards (22) is read and stored in said film information memory means (77), and the film information stored in said memory means is read out by said printer (26) to process the slides (12) for each individual customer.

5. A photographic printing system according to Claim 4, wherein each of said sorting cards (22) has an order sorting sign constituted by pits (62) which are formed therein and are optically read off.

6. A photographic printing system according to Claim 1, wherein said printer (26) has a film density sensor (92) which detects the density of the picture carried by the film of each of the slides (12), said printer (26) being arranged such that exposure time is set at a constant value when a film density signal obtained by said sensor (92) is above a predetermined value.

7. A photographic printing system according to Claim 1, wherein said supply-side magazine (18) only houses in its slide housing chambers (620) the whole of any series of slides (12) for a single customer which includes a slide or slides which need to be subjected to re-printing, while said slide film information includes information about any slide which needs to be subjected to re-printing, and said printer (26) effects re-printing only with respect to such slides which need to be subjected to re-printing.

8. A photographic printing system according to Claim 1, wherein each of said magazines (18) has the shape of a hollow cylinder which has said slide housing chambers (620) provided radially thereof and in a multiplicity of stages axially thereof, and further comprising a magazine mounting board (710) and driving means (614) which rotates as well as vertically moves said magazine mounting board (710) to a predetermined position, thereby moving any desired slide housing chamber (620) in the magazine (18) to a slide unloading position.

9. A photographic printing system according to Claim 8 further comprising push-out means (732) positioned within a bore (746) formed in said magazine (18) such as to oppose said unloading position and push out a slide (12) in a desired slide housing chamber (620) in the radial direction of said magazine.

10. A photographic printing system according to Claim 1, wherein each of said magazines (18) has the shape of a hollow cylinder which has a plurality of slide housing chambers (620) provided radially thereof in such a manner that it is possible for slides (12) to be loaded and unloaded radially of said magazine, said slide housing chambers (620) being formed in a multiplicity of stages axially of said magazine (18).

**Patentansprüche**

1. Fotografisches Kopiersystem mit einer Kopiervorrichtung (26) zum Abziehen von Bildern auf einer Rolle Fotopapier (28), mit einem zuführseitigen Magazin (18), das an der Zuführseite der Kopiervorrichtung abnehmbar angebracht ist und die Kopiervorrichtung mit abzuziehenden Diapositiven (12) und mit Diapositivfilm-Information beliefern kann, mit einem annahmeseitigen Magazin (18), das an der Annahmeseite der Kopiervorrichtung (26) abnehmbar befestigt ist und von der Kopiervorrichtung die Diapositive, die dem Abzugsvorgang unterworfen worden sind, und die Diapositivfilm-Information, die aus der in der Kopiervorrichtung erhaltenen Diapositivfilm-Information und der zugeführten Diapositivfilm-Information zusammengesetzt ist, empfangen kann, wobei Informations-Lese/Schreibmittel (79A, 79B) der Kopiervorrichtung vorgesehen sind, die Informations-Übertragungsmitteln (79) eines angebrachten Magazins zugeordnet sind, wobei jedes Magazin (18) eine Vielzahl von Diapositiv-Aufnahmekammern (620) und Filminformations-Speichermittel (77) zum Speichern von Filminformation in Übereinstimmung mit jeder Diapositiv-Aufnahmekammer besitzt.

2. Fotografisches Kopiersystem nach Anspruch 1, dadurch gekennzeichnet, daß die Kopiervorrichtung (26) eine Magazinmarkierungs-Kopiervorrichtung (95) besitzt, die eine Magazinmarkierungs-Information (79) von den Magazinen empfängt und die Magazinmarkierung (110, 112) an einen Endbereich einer Rolle Fotopapier (28) einkopiert, wobei diese Markierungen eine Unterscheidung der zuführseitigen und empfängerseitigen Magazine (18) voneinander ermöglichen.

3. Fotografisches Kopiersystem nach Anspruch 1, dadurch gekennzeichnet, daß die Diapositiv-Aufnahmekammern (620) mit Diapositiven (12) und Sortierkarten (22) derart bestückt werden, daß die Diapositive für jeden der von einem einzelnen Kunden gegebenen Aufträge in Abschnitte unterteilt sind und eine Sortierkarte in der Diapositiv-Aufnahmekammer (620) an einem Ende der Kammern, die eine Serie von Diapositiven für einen einzelnen Kunden aufnehmen, angeordnet ist, wobei jede der Sortierkarten (22) mit einem Kennzeichen (60; 62; 64; 66) versehen ist, das jede Serie von Diapositiven eines einzelnen Kunden bezeichnet, wodurch eine Serie von Diapositiven für einen Kunden von denen für andere Kunden getrennt bearbeitet wird.

4. Fotografisches Kopiersystem nach Anspruch 3, dadurch gekennzeichnet, daß das Kennzeichen (60; 62; 64; 66), das auf jeder der Sortierkarten (22) vorgesehen ist, gelesen und in den Filminformations-Speichermitteln (77) gespeichert wird und daß die in den Speichermitteln gespeicherte Filminformation von der Kopiervorrichtung (26) ausgelesen und so die Diapositive (12) für jeden einzelnen Kunden bearbeitet werden.

5. Fotografisches Kopiersystem nach Anspruch 4, dadurch gekennzeichnet, daß jede der Sortierkarten (22) ein Auftragssortier-Kennzeichen aufweist, das durch Löcher (62) gebildet ist, die in den Karten gebildet sind und optisch ausgelesen werden.

6. Fotografisches Kopiersystem nach Anspruch 1, dadurch gekennzeichnet, daß die Kopiervorrichtung (26) einen Filmdichte-Sensor (92) besitzt, der die Dichte des Bildes auf dem Film jedes der Diapositive (12) erfaßt, wobei die Kopiervorrichtung (26) derart eingerichtet ist, daß die Belichtungszeit auf einen konstanten Wert gesetzt ist, wenn ein vom Sensor (92) erhaltenes Filmdichte-Signal oberhalb eines vorbestimmten Wertes ist.

7. Fotografisches Kopiersystem nach Anspruch 1, dadurch gekennzeichnet, daß das zuführseitige Magazin (18) in seinen Diapositiv-Aufnahmekammern (620) nur die Gesamtheit einer Serie von Diapositiven (12) für einen einzelnen Kunden aufnimmt, welche Serie ein Diapositiv oder mehrere Diapositive, die einem erneuten Abzugsvorgang unterworfen werden sollen, enthält, wobei die Diapositivfilm-Information Informationen über ein beliebiges Diapositiv enthält, das einem erneuten Abzugsvorgang zu unterwerfen ist, und daß die Kopiervorrichtung (26) ein erneutes Abziehen nur für solche Diapositive bewirkt, die einem erneuten Abzugsvorgang unterworfen werden müssen.

8. Fotografisches Kopiersystem nach Anspruch 1, dadurch gekennzeichnet, daß jedes der Magazine (18) die Form eines Hohlzylinders aufweist, in dem die Diapositiv-Aufnahmekammern (620) radial und in einer Vielzahl von axialen Etagen vorgesehen sind, und daß ferner eine Magazin-Montageplatte (710) und Antriebsmittel (614), die die Magazin-Befestigungstafel (710) in eine vorbestimmte Position sowohl drehen als auch vertikal bewegen, vorgesehen sind, wodurch jede gewünschte Diapositiv-Aufnahmekammer (620) im Magazin (18) in eine Diapositiv-Entnahmeposition bewegt wird.

9. Fotografisches Kopiersystem nach Anspruch 8, dadurch gekennzeichnet, daß eine Ausschiebe-Vorrichtung (732) vorgesehen ist, die innerhalb einer Bohrung (746) im Magazin (18) derart angeordnet ist, daß sie der Entnahmeposition gegenüberliegt und daß ein Diapositiv (12) in einer gewünschten Diapositiv-Aufnahmekammer (620) in radialer Richtung des Magazins ausschiebbar ist.

10. Fotografisches Kopiersystem nach Anspruch 1, dadurch gekennzeichnet, daß jedes der Magazine (18) die Form eines Hohlzylinders aufweist, der eine Vielzahl von Diapositiv-Aufnahmekammern (620) aufweist, die radial derart vorgesehen sind, daß Diapositive (12) radial zum Magazin eingebracht und entnommen werden können, wobei diese Diapositiv-Aufnahmekammern (620) in einer Vielzahl von axialen Etagen des Magazins (18) gebildet sind.

**Revendications**

1. Système de tirage photographique comportant une tireuse (26) permettant de tirer des photographies sur un rouleau de papier photographique (28); un magasin (18) placé du côté alimentation qui est monté de manière amovible sur le côté alimentation de ladite tireuse et est destiné à fournir à ladite tireuse des diapositives (12) qui doivent être soumises au tirage et une information relative à la pellicule diapositive; un magasin (18) placé du côté réception qui est monté de manière amovible sur le côté réception de ladite tireuse (26) et est destiné à recevoir de ladite tireuse les diapositives qui ont été soumises au tirage et une information relative à la pellicule diapositive, composée par l'information relative à la pellicule diapositive qui a été obtenue dans ladite tireuse à laquelle s'ajoute ladite information relative à la pellicule diapositive qui a été fournie, où des moyens de lecture-écriture d'information (79A, 79B) de la tireuse sont prévus de manière à correspondre avec un moyen de transfert d'information (79) d'un magasin monté, et où chacun desdits magasins (18) possède plusieurs chambres de logement de diapositive (620) et des moyens de mémorisation d'information relative à la pellicule (77) servant à mémoriser une information relative à la pellicule en correspondance avec chacune desdites chambres de logement de diapositive.

2. Système de tirage photographique selon la revendication 1, où ladite tireuse (26) possède un moyen (95) d'impression de signe de distinction de magasin qui reçoit une information (79) de signe de distinction de magasin de la part desdits magasins et imprime des signes de distinction de magasin (110, 112) sur une partie terminale d'un rouleau de papier photographique (28), lesdits signes permettant de distinguer l'un de l'autre lesdits magasins (18) placés du côté alimentation et du côté réception.

3. Système de tirage photographiquee selon la revendication 1, où lesdites chambres (620) de logement de diapositive sont chargées à l'aide de diapositives (12) et de cartes de triage (22) de manière que les diapositives soient divisées pour chacune des commandes fournies par des clients particuliers et qu'une carte de triage soit disposée dans la chambre de logement de diapositive (620) à une extrémité des chambres logeant une série de diapositives d'un seul client, chacune desdites cartes de triage (22) étant dotée d'un signe (60, 62, 64, 66) qui représente chaque série de diapositives d'un client particulier, si bien qu'une série de diapositives (12) d'un seul client est traitée séparément de celles d'autres clients.

4. Système de tirage photographique selon la revendication 3, où le signe (60, 62, 64, 66) disposé sur chacune desdites cartes de triage (22) est lu et emmagasiné dans ledit moyen (77) de mémorisation d'information relative à la pellicule, et l'information relative à la pellicule qui est emmagasinée dans ledit moyen de mémorisation est lue par ladite tireuse (26) en vue du traitement des diapositives (12) de chaque client particulier.

5. Système de tirage photographique selon la revendication 4, où chacune desdites cartes de triage (22) possède un signe de triage de commande constitué par des alvéoles (62) qui y sont formées et sont lues optiquement.

6. Système de tirage photographique selon la revendication 1, où ladite tireuse (26) possède un capteur (92) de densité de pellicule qui détecte la densité de l'image portée par la pellicule de chacune des diapositives (12), ladite tireuse (26) étant conçue de façon que le temps d'exposition soit fixé à une valeur constante lorsqu'un signal de densité de pellicule obtenu par ledit capteur (92) se trouve au-dessus d'une valeur prédéterminée.

7. Système de tirage photographique selon la revendication 1, où ledit magasin (18) se trouvant du côté alimentation loge seulement dans ses chambres de logement de diapositive (620) la totalité de toute série de diapositives (12) d'un seul client qui contient une diapositive ou des diapositives devant être soumises à un retirage, tandis que ladite information relative à la pellicule diapositive contient une information relative à toute diapositive qui doit être soumise à un retirage, et la tireuse (26) n'effectue le retirage que pour les diapositives qui doivent être soumises à un retirage.

8. Système de tirage photographique selon la revendication 1, où chacun desdits magasins (18) possède la forme d'un cylindre creux dans lequel lesdites chambres de logement de diapositive (620) sont disposées radialement et suivant une multiplicité d'étages axiaux de celui-ci, et comprenant en outre un panneau de montage de magasin (710) et un moyen d'entraînement (614) qui fait tourner et déplace verticalement ledit panneau de montage de magasin (710) jusqu'à une position prédéterminée, de manière à déplacer toute chambre de logement de diapositive (620) voulue du magasin (18) jusqu'à une position de déchargement de diapositive.

9. Système de tirage photographique selon la revendication 8, comprenant en outre un moyen de poussée (732) placé à l'intérieur d'un trou (746) formé dans ledit magasin (18) de manière à se trouver en regard de ladite position de déchargement et à faire sortir, en la poussant, une diapositive (12) se trouvant dans une chambre de logement de diapositive (620) voulue suivant la direction radiale dudit magasin.

10. Système de tirage photographique selon la revendication 1, où chacun desdits magasins (18) a la forme d'un cylindre creux qui possède plusieurs chambres (620) de logement de diapositive disposées radialement par rapport à celui-ci de manière qu'il soit possible de charger et de décharger des diapositives (12) radialement par rapport audit magasin, lesdites chambres de logement de diapositive (620) étant formées en une multiplicité d'étages disposés axialement par rapport audit magasin (18).

# FIG. 1

# FIG. 2

FIG. 3

12

16

14

FIG. 4

22

48 7

60

64

66

62

FIG. 5

52 16 14 H 12 54

Driving
Section

51

58

FIG. 6

52 62 60 22 54

Driving
section

68 51 48

3

F I G. 7

# F I G . 8

FIG. 9

FIG. 10

# FIG. 11

# FIG. 12

# FIG. 13

EP 0 173 097 B1

# FIG. 14

## F I G . 15

130  28  88

95

26

78,88  77  18

18  77  78,88

M

92  92

86  12  N

83  90  87  94

Supply  614
side

614  Reception
side

## F I G . 17

Printer
number

Photographic
paper
number
114

116

Lot
number

28  118

13 00 12

23 05

110
Slide supply-side
magazine number

112
Slide reception-side
magazine number

# FIG. 16

Supply - side magazine

Printer

Reception - side magazine

F I G . 18

# FIG. 19

FIG. 20

# F I G . 2I (A)

Start
Printing preparation

Set magazine — 200

Start switch ON — 202

Set magazine at initial position — 204

Calibration — 206

Input ID number — 208

B →

Input number of prints required and exposure amount correction value — 210

Insert slide — 212

C

A

Insert sorting card — 220

Processing for all orders end? — 222

N

Y

Transfer data to magazine — 224

End

Number of prints required, exposure amount correction values (C.M.Y) and focusing correction value for each slide

Sort number for each order

ID number

JOB number

# F I G. 2I (B)

```
        ┌───┐
        │ C │
        └───┘
          │
  ┌───────────────────┐
  │ Judge facing      │ ─ 214
  │ orientation       │
  │ of film and       │
  │ posture of slide. │
  │ Measure film      │
  │ position          │
  └───────────────────┘
          │
  ┌───────────────────┐
  │ Load slide into   │ ─ 216
  │ magazine          │
  │ Vertically move   │
  │ or rotate         │
  │ magazine          │
  └───────────────────┘
          │
        ◇─────────◇
    N  ╱ Processing ╲  ─ 217
  ┌──┐╱  of slide for ╲
  │ B│   one order end
  └──┘╲      ?        ╱
        ╲───────────╱
          │ Y
  ┌───────────────────┐
  │     Print         │ ─ 218
  │     SP bag        │
  └───────────────────┘
          │
        ┌───┐
        │ A │
        └───┘
```

ID number
Sort number
Magazine number
Number of slider
Number of prints
Machine number
Operator number
Date

16

# FIG. 22

Start automatic printer

Set roll of photographic paper and magazine ~ 300

Start switch ON ~ 302

Read date in magazine ~ 304 ----- JOB numbers and magazine numbers in supply- and reception-side magazines. All of the other information in supply-side magazine

Print magazine number, lot number, etc. ~ 306

Set magazine at initial position ~ 308

Printing completed ? ~ 310 Y / N

Printing ~ 312

Transfer printing data to reception-side magazine ~ 314 ----- Number of prints required, exposure amount (C.M.Y.) and focusing correction value for each slide. Sort number, ID number, Magazine number and JOB number for each order

One-lot processing end alarm ~ 316

End

17

# F I G. 23(A)

312

Start printing

~400

Sorting card ? — Y → D

N

~402

Read C.M.Y film density

~404

Density above predetermined value ? — Y

N

~406

Calculate exposure time $T_1$, $T_2$, $T_3$

~408

$T_1 \leftarrow t_0$
$T_2 \leftarrow t_0$
$T_3 \leftarrow t_0$

~410

N = 1

E

# F I G . 23(B)

# FIG. 24(A)

```
        ┌──────────────┐
        │ Start final  │
        │ processing   │
        └──────┬───────┘
               │
        ╱──────┴───────╲
       ╱ Set roll of    ╲──── 500
      │ photographic     │
       ╲ paper and      ╱
        ╲ magazine     ╱
         └─────┬──────┘
               │
        ┌──────┴───────╲
        │ Start switch  │──── 502
        │ ON           ╱
        └─────┬───────┘
              │
        ╱─────┴──────╲
       ╱ Read data    ╲──── 504
      ╱   in          ╱
     ╱  magazine     ╱
      └────┬───────┘
           │
     ╱─────┴──────╲
    ╱ Set magazine ╲──── 506
   ╱     at         ╱
  ╱ initial position╱
   └─────┬────────┘
```

F ────────→

```
         ╱╲
        ╱  ╲  508
  ╱────╱Slides╲──── Y ──→ ┌──────────────┐
       ╱for one╲          │ Move pointer │──── 514
       ╲order   ╱         │ by one order │
        ╲involve╱         └──────┬───────┘
         ╲re-  ╱                 │
          ╲printing╱             │
           ╲╱                    │
            N                    │
            │                    │
     510 ──╱──────╲              │
         ╱ Cut paper╲          ╱──────────╲
        ╱    and     ╲        ╱ Cut paper  ╲──── 516
       ╱ discharge   ╱        ╲            ╱
        ╲  slide    ╱          └────┬─────┘
         └────┬────┘                │
              │                     │
          ╱───┴───╲             ╱───┴───╲
         ╱Processing╲─ N       ╱Processing╲─ N
        ╱for one order╲       ╱for one order╲
        ╲ completed   ╱       ╲ completed   ╱
         ╲    ?      ╱         ╲    ?      ╱
          ╲────────╱ 512        ╲────────╱ 518
             Y                      Y
             │←─────────────────────┘
             │
          ┌──┴──┐
          │  G  │
          └─────┘
```

# F I G . 24 (B)

G

Stop paper
cutting and
slide discharge — 513

Sort number
Number of slides — 520
Number of prints

522 — Processing
for one lot
completed
? — N

Y

528 — Display re-printing ← Y — 526 One lot
involves re-print-
ing ?

N

Start switch ON — 524

F

JOB number — 530

One-lot
processing — 532
end alarm

End